# EUROPEAN PATENT APPLICATION

(11) **EP 4 502 352 A1**
(43) Date of publication of application: **05.02.2025**
(21) Application number: 24192045.3
(22) Date of filing: 31.07.2024
(51) Int. Cl.: F02C 6/08, F01D 21/00, F02C 7/18, F02C 9/18

(54) **GAS TURBINE ENGINE BLEED SYSTEM CONTROL AT ENGINE SHUTDOWN**

(30) Priority: 31.07.2023 US 202318362116
(71) Applicant: RTX Corporation, Farmington, CT 06032 (US)
(72) Inventor: PAPA, Federico, Farmington, 06032 (US); MOORE, Christopher, Farmington, 06032 (US)
(74) Representative: Dehns

(57) **Abstract**

A method includes the steps of providing an engine (100) with a compressor (101). A tap (102, 103) taps air from the compressor (101) and passes it through a bleed valve (105, 106, 108), and a precooler (110), and downstream of the precooler (110) to a use on an associated aircraft (90). Fan cooling air passes through a fan air valve (111) across the precooler (110) to cool the tapped air before it passes to the use and then into a core engine downstream of the precooler (110) to cool internal components. If shutdown of the engine (100) is coming, the method runs the engine (100) for a period of time, closes the bleed valve (105, 106, 108) and opens the fan air valve (111) to allow fan cooling air to continue passing through the precooler (110), and into the engine (100) to cool the components.

## Description

### TECHNICAL FIELD

This application relates to a method and apparatus for controlling a bleed air system on a gas turbine engine to reduce peak temperatures at shutdown.

### BACKGROUND

Gas turbine engines are known, and typically include a fan delivering air into a bypass duct as propulsion air. The air is also delivered into the core of the engine including a compressor section where the air is compressed. The air passes into a combustor where it is mixed with fuel and ignited. Products of this combustion pass downstream over turbine rotors, driving them to rotate. The turbine rotors in turn drive the fan and compressor rotors.

As can be appreciated, a good deal of heat is generated during operation of a gas turbine engine. Under modern aeronautic conditions, an aircraft may start repeatedly and perform several flights in a course of a day. At the end of each flight it would be desirable to cool the engine quickly such that the aircraft need not sit on the ground for an undue length of time. A term associated with the amount of time the aircraft is operational is time on wing, and it is desirable to increase the time on wing.

However, at shutdown the engine must be cooled to a certain extent before it can be again started.

There are a number of systems associated with a gas turbine engine for various purposes. One system provides compressed air to an environmental control system on the aircraft. The environmental control system utilizes the compressed air for a number of applications such as cabin air, cargo air, etc.

### SUMMARY OF THE INVENTION

An aspect of the present invention provides a method of operating an air system on an aircraft including the steps of 1) providing an engine with a compressor, and a tap for tapping compressed tapped air from the compressor and passing the tapped air through a bleed valve, and through a precooler, the tapped air downstream of the precooler passing to a use on an associated aircraft, 2) providing fan cooling air through a fan air valve across the precooler to cool the tapped air before it passes to the use and passing the fan cooling air into a core engine (e.g., a core compartment of the engine) downstream of the precooler to cool internal components, 3) determining that shutdown of the engine is coming, 4) running the engine for a period of time, 5) closing the bleed valve and opening the fan air valve to allow fan cooling air to continue passing through the precooler, and into the engine to cool the components and 6) then shutting down the engine.

In an embodiment according to the above, the bleed valve includes a pair of valves in series.

In another embodiment according to any of the previous embodiments, an engine controller for the engine controls at least steps 4 and 6.

In another embodiment according to any of the previous embodiments, an integrated air management system on the associated aircraft controls at least steps 1, 3 and 5.

In another embodiment according to any of the previous embodiments, the use is an environmental control system on the aircraft.

In another embodiment according to any of the previous embodiments, in step 4) the engine is run at an idle speed.

In another embodiment according to any of the previous embodiments, the step 5) occurs prior to step 4).

Another aspect of the present invention provides a combination including a gas turbine engine and an associated air supply system includes an engine with a fan and a compressor. A tap taps compressed tapped air from the compressor and is connected to a bleed valve, and a precooler. The air downstream of the precooler is connected to an environmental control system ("ECS") for an associated aircraft. A fan air valve is connected to pass cooling air through the precooler to cool the tapped air before it passes to the ECS. A control is programmed to determine that shutdown of the engine is coming. The control is programmed for running the engine for a period of time, closing the bleed valve and opening the fan air valve to allow the fan cooling air to pass through the precooler and into the engine to cool components within the engine, and then shutting down the engine after the period of time.

In an embodiment according to the above, the bleed valve includes a pair of valves in series.

In another embodiment according to any of the previous embodiments, the control includes an engine controller for the engine programmed to reach the decision that shutdown is coming, to run the engine, and to shut down the engine.

In another embodiment according to any of the previous embodiments, the control includes an integrated air management system programmed to control the bleed valve and the fan air valve.

In another embodiment according to any of the previous embodiments, the control is programmed to utilize idle speed for running the engine for the period of time.

In another embodiment according to any of the previous embodiments, the control is programmed for closing the bleed valve and opening the fan air valve prior to running the engine at a ground handling speed.

In another aspect of the present invention, an aircraft includes an aircraft body including an environmental control system ("ECS"). A gas turbine engine powers the aircraft and has a fan and a compressor. A tap taps compressed tapped air from the compressor and is connected to a bleed valve, and a precooler. The air downstream of the precooler is connected to pass to the ECS. A fan air valve is connected to pass fan cooling air through the precooler to cool the tapped air before it passes to the ECS. A control is programmed to determine that shutdown of the engine is coming. A valve is connected to pass cooling air through the precooler to cool the tapped air before it passes to the ECS. A control is programmed to determine a decision that shutdown of the engine is coming. The control is programmed for running the gas turbine engine for a period of time, closing the bleed valve and opening the fan air valve to allow the fan cooling air to pass through the precooler, and into the engine to cool components within the engine and then shutdown the gas turbine engine after the period of time.

In an embodiment according to the above, the bleed valve includes a pair of valves in series.

In another embodiment according to any of the previous embodiments, the control includes an engine controller for the engine programmed to determine that shutdown of the engine is coming, to run the engine at ground handling speed, and to shut down the engine.

In another embodiment according to any of the previous embodiments, the control also includes an integrated air management system on the associated aircraft programmed to control the bleed valve and the fan air valve.

In another embodiment according to any of the previous embodiments, the control is programmed to utilize idle speed for running the engine for the period of time.

In another embodiment according to any of the previous embodiments, the control is programmed for closing the bleed valve and opening the fan air valve prior to running the engine at a ground handling speed.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2 shows an aircraft with an engine and a cabin air supply system.
Figure 3 shows detail of the Figure 2 air supply system.
Figure 4 is a flow chart of a shutdown procedure for the aircraft.

### DETAILED DESCRIPTION

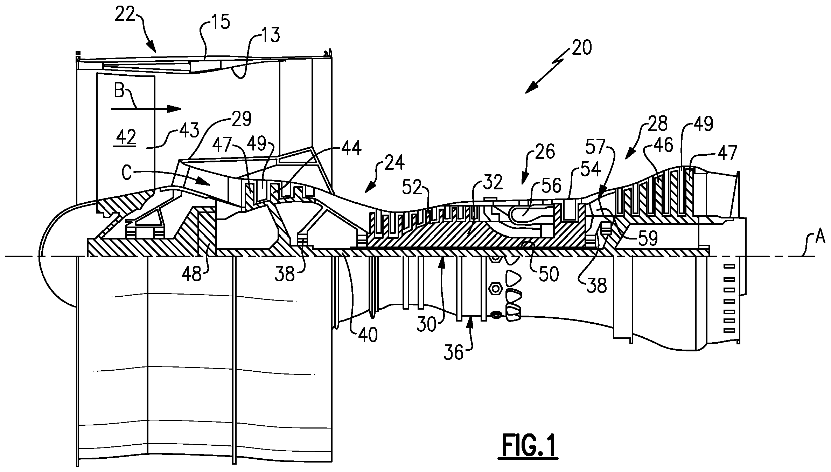

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (1.0 m), or more narrowly no more than 75 inches (1.9 m). For example, the maximum radius of the fan blades 43 can be between 45 inches (1.1 m) and 60 inches (1.5 m), such as between 50 inches (1.3 m) and 55 inches (1.4 m). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of pound-force (Ibm) of fuel being burned divided by pound-force (Ibf) of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7°R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482.2 °C), or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8 °C), or more narrowly greater than or equal to 800.0 °F (426.7 °C), such as between 900.0 °F (482.2 °C) and 975.0 °F (523.9 °C). The relatively low EGT can be utilized in combination with the other techniques disclosed herein to reduce fuel consumption.

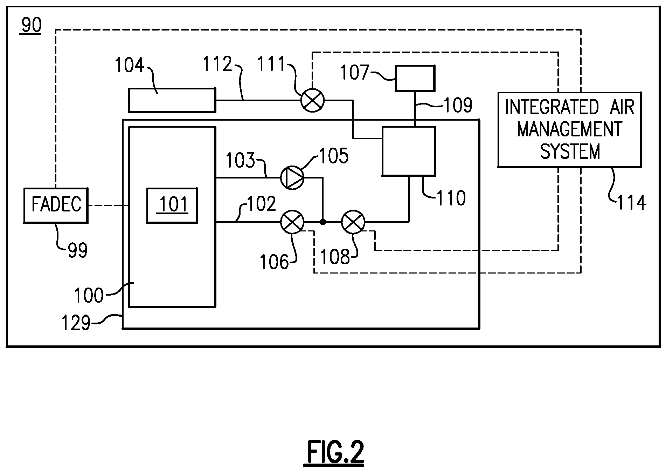

An aircraft 90 is shown schematically in Figure 2. An engine 100 has a compressor 101 delivering air into a bleed system using lines 102 and 103. Bleed line 102 is controlled by a high pressure valve ("HPV") 106 and bleed line 103 has a check valve 105. Downstream of the high pressure valve 106 and check valve there is a pressure regulating and shutoff valve ("PRSOV") 108. Air is tapped from the compressor 101, passes through the valves 106 or 105 and 108 and through a precooler heat exchanger 110. From precooler 110 the air connects to a line 109 leading to an environmental control system 107 on the aircraft 90.

A fan 104 generates a good deal of airflow such as into a bypass duct as shown in Figure 1. A tap 112 passes through a fan air valve ("FAV") 111, and then across the precooler 110 to cool the air heading towards line 109.

Downstream of the precooler 110 the fan air is delivered into the core compartment 129 with temperature limited external components and mixes with ventilation air.

A full authority digital electronic controller ("FADEC") 99 controls engine 100. An integrated air management system ("IAMS") 114 also controls some aspects of the system shown in Figure 2. Namely, as shown the FADEC generally controls the engine 100, but also communicates with the lAMS 114. The lAMS 114 is shown controlling valves 106, 108 and 111.

It should be understood that the lAMS 114 controls other elements, however, for purposes of this disclosure only those necessary for understanding this disclosure are illustrated here.

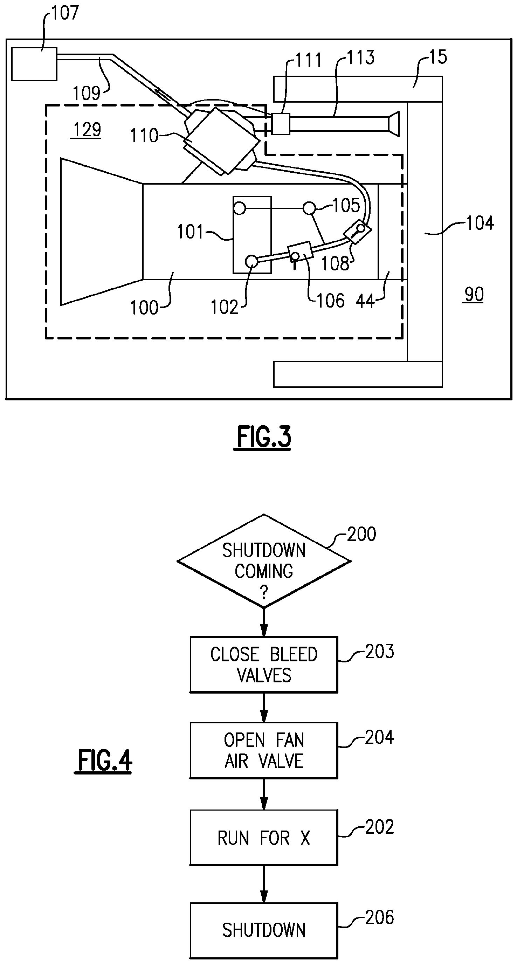

Figure 3 shows more detail, including the fan 104, compressor 101, the HPV 106 and PRSOV 108. In addition, the precooler 110 is shown communicating with the air downstream of the valve 108. The precooler 110 delivers cooled compressor air into the line 109 and eventually to the Aircraft ECS system 107. The fan air valve 111 has an inner scoop 113 for receiving air, such as from the bypass duct of the engine shown in Figure 1, and delivering this air through the FAV 111. Downstream of FAV 111 the bypass air passes through the precooler 110 to cool the air heading into line 109. The air from the fan inlet scoop 113 then passes to the core compartment 129 of the engine 100. That air circulates over components within the core compartment of the engine and provides some cooling.

During normal flight of an aircraft having the engine 100, the valve 108 is open and HPV 106 position is controlled, as is the fan air valve 111. Air is supplied to line 109 and the ECS 107.

Before shutdown, valves 106, 108 and 111 are closed. As mentioned above, after a flight, the engine components are quite warm and it would be desirable to provide cooling.

The present disclosure utilizes existing components to provide such cooling.

As shown in Figure 4, a flow chart for providing a shut down control implemented using the FADEC 99 and IAMS 114 begins with a determination as to whether a shutdown of the engine 100 is coming at step 200. This would typically occur when the aircraft is at the gate. When it is determined that a shutdown is coming, PRV 106 and HPV 108 are closed at step 203 and the fan air valve 111 is opened at step 204. Note that in an embodiment it may only be the HPV 108 which is closed. For purposes of this application, the term "bleed valve" would apply to either closing both PRV 106 and HPV 108, or simply closing HPV 108.

The engine then runs for a time X at step 202. The time X would be determined based upon ambient temperatures and other conditions after the flight. Once the time X is completed, the FAV is closed and the engine shuts down.

While the steps 203 and 204 are specifically disclosed as occurring prior to step 202, the three steps could all occur simultaneously. Moreover, under some embodiments step 202 could occur before steps 203 and 204.

The step 202 running may be at ground handling speed, and more particularly may be idle speed in some applications.

During the shutdown procedure illustrated in Fig. 4, the valves 106 and 108 are closed, while valve 111 is open. Thus, hot air does not pass through the precooler 110. Since the engine is running at ground handling speed or at idle, air will be driven into the scoop 113, through the valve 111 across the precooler 110, and into the engine core compartment 129. Since this air has not cooled any other fluid in the precooler 110 it will be relatively cool. This cooler air will thus provide cooling for the components such that they will cool down to an acceptable temperature much more quickly than they would without the use of the described shutdown procedure.

At step 206, shutdown eventually occurs. This may occur after the steps 202, 203 and 204 have gone on for a period of several minutes. In embodiments the steps 202, 203 and 204 would occur for a time between 2 and 30 minutes.

In one exemplary embodiment, the lAMS 114 controls steps 203 and 204, the FADEC 99 controls steps 202, and FADEC as well as lAMS control step 206.

A method of operating an air system on an aircraft under this disclosure could be said to include the steps of providing an engine with a compressor, and a tap for tapping compressed tapped air from the compressor and passing the tapped air through a bleed valve. The tapped air then passing through a precooler downstream of the precooler the tapped air passing to a use on an associated aircraft. Fan cooling air is provided through a fan air valve across the precooler to cool the tapped air before it passes to the use. The fan cooling air passes into a core compartment of the engine downstream of the precooler to cool internal components. Next, it is determined that shutdown of the engine is coming. The engine runs at for a period of time. The bleed valve is closed and the fan air valve opened to allow fan cooling air to continue passing through the precooler, and into the engine to cool the components. Note, as mentioned above, the valves may be commanded prior to running the engine. Next, the engine is shutdown.

A combination including a gas turbine engine and an associated air supply system under this disclosure could be said to include an engine with a fan and a compressor. A tap taps compressed tapped air from the compressor and is connected to a bleed valve, and a precooler. The air downstream of the precooler is connected to an environmental control system ("ECS") for an associated aircraft. A fan air valve is connected to pass cooling air through the precooler to cool the tapped air before it passes to the ECS. A control is programmed to determine that shutdown of the engine is coming. The control is programmed for running the method as mentioned above.

The benefits of this cooling may be reduced coking formation in fuel nozzles during cooldown. Further, there may be reduced coking formation in pylon drain lines during cooldown. In addition, there may be reduced coking formation in oil/fuel lines routed through a core engine compartment during cooldown. All of this would improve the time on wing of the associated aircraft and reduce shop visits or other maintenance.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. A method of operating an air system on an aircraft (90) comprising the steps of:
1) providing an engine (100) with a compressor (101), and a tap (102, 103) for tapping compressed tapped air from the compressor (101) and passing the tapped air through a bleed valve (105, 106, 108), and through a precooler (110), the tapped air downstream of the precooler (110) passing to a use on an associated aircraft (90);
2) providing fan cooling air through a fan air valve (111) across the precooler (110) to cool the tapped air before it passes to the use and passing the fan cooling air into the engine (100) downstream of the precooler (110) to cool engine internal components;
3) determining that shutdown of the engine (100) is coming;
4) running the engine (100) for a period of time;
5) closing the bleed valve (105, 106, 108) and opening the fan air valve (111) to allow fan cooling air to continue passing through the precooler (110), and into the engine (100) to cool the components; and
6) then shutting down the engine (100).

2. The method as set forth in claim 1, wherein the bleed valve (105, 106, 108) includes a pair of valves in series.

3. The method as set forth in claim 1 or 2, wherein an engine controller (99) for the engine (100) controls at least steps 4 and 6.

4. The method as set forth in claim 1, 2 or 3, wherein an integrated air management system (114) on the associated aircraft (90) controls at least steps 1, 3 and 5.

5. The method as set forth in any preceding claim, wherein the use is an environmental control system (107) on the aircraft (90).

6. The method as set forth in any preceding claim, wherein in step 4) the engine (100) is run at an idle speed.

7. The method as set forth in any preceding claim, wherein the step 5) occurs prior to step 4).

8. A combination including a gas turbine engine (100) and an associated air supply system comprising:
an engine (100) with a fan (104) and a compressor (10), and a tap (102, 103) for tapping compressed tapped air from the compressor (101) and connected to a bleed valve (105, 106, 108), and a precooler (110), the air downstream of the precooler (110) connected to an environmental control system ("ECS") (107) for an associated aircraft (90);
a fan air valve (111) connected to pass cooling air through the precooler (110) to cool the tapped air before it passes to the ECS (107);
a control (99, 114) programmed to determine that shutdown of the engine (100) is coming;
the control (99, 114) programmed for running the engine (100) for a period of time, closing the bleed valve (105, 106, 108) and opening the fan air valve (111) to allow the fan cooling air to pass through the precooler (110) and into the engine (100) to cool components within the engine (100), and then shutting down the engine (100) after the period of time.

9. The combination as set forth in claim 8, wherein the bleed valve (105, 106, 108) includes a pair of valves in series.

10. The combination as set forth in claim 8 or 9, wherein the control (99, 114) includes an engine controller (99) for the engine (100) programmed to reach the decision that shutdown is coming, to run the engine (100), and to shut down the engine (100).

11. The combination as set forth in claim 8, 9 or 10, wherein the control (99, 114) includes an integrated air management system (114) programmed to control the bleed valve (105, 106, 108) and the fan air valve (111).

12. The combination as set forth in any of claims 8 to 11, wherein the control (99) is programmed to utilize idle speed for running the engine (100) for the period of time.

13. The combination as set forth in any of claims 8 to 12, wherein the control (114) is programmed for closing the bleed valve (105, 106, 108) and opening the fan air valve (111) prior to running the engine (100) at a ground handling speed.

14. An aircraft (90) comprising:
an aircraft body including an environmental control system ("ECS") (107); and
the combination of any of claims 8 to 13, wherein the gas turbine engine (100) is configured to power the aircraft (90).

15. The aircraft as set forth in claim 14, wherein the control (99, 114) includes an/the engine controller (99) for the engine (100) programmed to determine that shutdown of the engine (100) is coming, to run the engine (100) at a ground handling speed, and to shut down the engine (100).
